# EUROPÄISCHE PATENTSCHRIFT

(11) **EP 3 614 642 B1**
(45) Veröffentlichungstag und Bekanntmachung des Hinweises auf die Patenterteilung: **17.03.2021**
(21) Anmeldenummer: 18189716.6
(22) Anmeldetag: 20.08.2018
(51) Int. Cl.: H04L 29/06, H04L 29/08, H04L 29/12

(54) **VERFAHREN ZUM EINRICHTEN EINES STREAMS, VERFAHREN ZUR BEREITSTELLUNG VON STREAM-KENNUNGS-INFORMATIONEN, VERWENDUNG EINES NAMENSDIENST-SERVERS, GERÄT, COMPUTERPROGRAMM UND COMPUTERLESBARES MEDIUM**
METHOD FOR SETTING UP A STREAM, METHOD FOR PROVIDING STREAM IDENTIFICATION INFORMATION, USE OF A NAME SERVICE SERVER, DEVICE, COMPUTER PROGRAM AND COMPUTER READABLE MEDIUM
PROCÉDÉ DE RÉGLAGE D'UN FLUX, PROCÉDÉ DE FOURNITURE DES INFORMATIONS D'IDENTIFICATION DU FLUX, UTILISATION D'UN SERVEUR DE SERVICE NOMMÉ, APPAREIL, PROGRAMME INFORMATIQUE ET SUPPORT LISIBLE PAR ORDINATEUR

(43) Veröffentlichungstag der Anmeldung: 26.02.2020
(73) Patentinhaber: Siemens Aktiengesellschaft, 80333 München (DE)
(72) Erfinder: Albrecht, Harald, 90475 Nürnberg (DE); Fischer, Thomas, 91058 Erlangen (DE); Höme, Stephan, 91126 Schwabach (DE); Jung, Konstantin, 90537 Feucht (DE)

(56) Entgegenhaltungen:
- EP-A1- 2 765 758
- US-A1- 2013 282 453
- Pearson Levi: "Stream Reservation Protocol", AVnu Alliance Best Practices, 3. November 2014 (2014-11-03), Seiten 1-21, XP055449688, Gefunden im Internet: URL:http://avnu.org/wp-content/uploads/201 4/05/AVnu_Stream-Reservation-Protocol-v1.p df

## Beschreibung

Die Erfindung betrifft ein Verfahren zum Einrichten eines Streams in einem TSN-Netzwerk, insbesondere einem Netzwerk gemäß IEEE 802.1. Darüber hinaus betrifft die Erfindung ein Verfahren zur Bereitstellung von Stream-Kennungs-Informationen, die Verwendung eines DNS-Servers, ein Gerät, ein Computerprogramm und eine computerlesbares Medium.

Im Rahmen der IEEE-Standardisierung wurde in der Arbeitsgruppe AVB (Audio-Video-Bridging) die Technologie Ethernet (siehe IEEE 802) um Mechanismen zur Erreichung von garantierter QoS (sogenannte "Quality of Service") erweitert.

Time Sensitive Networking (TSN) bezeichnet eine Reihe von Standards, die u.a. den Bridging Standard IEEE 802.1Q um Mechanismen zur Übertragung echtzeitkritischer Daten über Ethernet-Netze erweitert. Zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Im Rahmen von AVB und TSN soll die Qualität durch sogenannte Streams garantiert werden. Ein Stream stellt eine geschützte Kommunikationsverbindung dar. Vor der eigentlichen Datenübertragung über einen Stream erfolgt eine Registrierung und Reservierung von Netzwerkressourcen, um einen verlustfreien Echt-Zeit-Transfer von Datenframes und eine pünktliche Lieferung zu ermöglichen. Für einen Stream kann eine Reservierung von Ressourcen insbesondere durch ein sogenanntes Stream-Reservation-Protokoll (SRP) durchgeführt werden. SRP ist beispielsweise in dem Aufsatz "Stream Reservation Protocol" von Levi Pearson, AVnu Alliance Best Practices, 3. November 2014 (2014-11-03), Seiten 1-21, XP055449688, ist das sogenannte Stream Reservation Protocol (SRP) behandelt.

Die Datenstromrichtung ist im TSN-Stream-Model gerichtet. Die Sendeseite oder Quelle wird dabei als "Talker" bezeichnet, die Empfangsseite oder Senke als "Listener". Einerseits ist es möglich, dass genau ein "Talker" gleichzeitig an zwei oder mehr "Listener" Daten sendet, andererseits können zwei oder mehr "Listener" an genau einen "Talker" gleichzeitig senden.

Applikationen identifizieren gegenüber Time Sensitive Networks, genauer gesagt gegenüber der TSN Control Plane, die einzelnen Streams über zugehörige Kennungen, insbesondere sogenannte Stream IDs. Diese sind aus Sicht von TSN 64 Bit lange Bitstrings ohne innere Struktur.

Damit zwei oder mehrere Stream-Teilnehmer sich mit einem gemeinsamen Stream mit der gleichen Stream ID verbinden können, müssen alle Teilnehmer die zum Stream gehörige Kennung für die Control Plane, insbesondere Stream ID kennen.

In der TSN-Architektur sind die Stream IDs für die Stream Identifikation bewusst mit lediglich 64 Bit vergleichsweise kurz gewählt. Dies ist darauf zurückzuführen, dass aus technischen Gründen jeweils alle Stream IDs in allen Knotenpunkten eines Time Sensitive Networks, insbesondere in allen TSN-Brigdes innerhalb eines TSN LANs, bekannt sein müssen und längere Stream IDs rasch das Speicherbudget überschreiten würden.

Stream IDs unterliegen infolge der vergleichsweise geringen Länge einer "Mangelverwaltung".

Eine Möglichkeit, mit der "Mangelverwaltung" von Stream IDs in einem Netzwerk umzugehen, besteht in einer manuellen Verwaltung. Dies geht beispielsweise durch Führen einer Tabelle, etwa einer Excel-Tabelle. Dies ist jedoch mit nicht unerheblichem Aufwand verbunden.

Die US 2013/282453 A1 offenbart ein System und ein Verfahren zum Streamen von Medien.

Insbesondere auch, um in einem Netzwerk neue TSN-Applikationen einfach durch "Plug and Play" hinzufügen zu können, ohne dass eine erneute Gesamtplanung der Stream IDs erforderlich ist, wäre eine automatische Verwaltung von Stream IDs im Betrieb wünschenswert.

Es ist daher eine Aufgabe der vorliegenden Erfindung, ein Verfahren zum Einrichten eines Streams in einem Netzwerk, insbesondere einem Netzwerk gemäß IEEE 802.1 anzugeben, welches sich mit geringem Aufwand durchführen lässt, insbesondere keiner manuellen Verwaltung der in der Control Plane verwendeten Stream-Kennungen bedarf. Darüber hinaus ist eine Aufgabe der vorliegenden Erfindung, ein Gerät anzugeben, welches zur Durchführung eines solchen Verfahrens geeignet ist.

Diese Aufgabe wird gelöst durch ein Verfahren zum Einrichten eines Streams in einem TSN-Netzwerk, insbesondere einem Netzwerk gemäß IEEE 802.1, bei dem
- von wenigstens einem Stream-Teilnehmer, welcher Daten über den Stream an wenigstens einen weiteren Stream-Teilnehmer senden und/oder Daten über den Stream von wenigstens einem weiteren Stream-Teilnehmer empfangen möchte, eine Anfrage-Nachricht an einen DNS-Server, auf dem Einträge hinterlegt sind, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen, gesendet wird, wobei die Anfrage-Nachricht wenigstens eine dem wenigstens einen Stream-Teilnehmer bekannte Stream-Kennung der ersten Art und den vorgegebenen Typ umfasst,
- der wenigstens eine Stream-Teilnehmer eine Antwort-Nachricht von dem DNS-Server erhält, welche eine zu dem Stream gehörige Stream-Kennung der zweiten Art enthält, und
- sich der wenigstens eine Stream-Teilnehmer unter Verwendung der erhaltenen Stream-Kennung an dem Stream anmeldet.

Darüber hinaus wird die Aufgabe gelöst durch ein Gerät, welches ausgebildet und/oder eingerichtet ist, um
- eine Anfrage-Nachricht an einen DNS-Server, auf dem Einträge hinterlegt sind, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen, zu senden, wobei die Anfrage-Nachricht wenigstens eine dem Gerät bekannte Stream-Kennung der ersten Art und den vorgegebenen Typ umfasst,
- um eine Antwort-Nachricht von dem DNS-Server zu erhalten, welche eine zu dem Stream gehörige Stream-Kennung der zweiten Art enthält, und
- um sich unter Verwendung der erhaltenen Stream-Kennung der zweiten Art mit einem zugehörigen Stream zu verbinden.

Die vorliegende Erfindung sieht mit anderen Worten vor, auf zwei verschiedene Arten von Stream-Kennungen zurückzugreifen. Dies macht es möglich, auf Seiten der Teilnehmer bzw. Anwendung(en) eine Art von Stream-Kennung zu verwenden, die sich von der Stream-Kennung, die in der Control Plane verwendet wird, unterscheidet. Insbesondere kann so auf Seiten der Teilnehmer bzw. Anwendung(en) eine Kennung herangezogen werden, die deutlich länger ist, als die im Rahmen von TSN in der Control Plane verwendete "nur" 64 bit große Stream ID. Für die Zuordnung von den Teilnehmer- bzw. Anwendungs-seitigen Stream-Kennungen zu den Stream-Kennungen aus bzw. für die Control Plane wird weiterhin erfindungsgemäß auf einen Namensdienst zugegriffen.

Unter der Control Plane (ins Deutsche übersetzt Steuerungsebene) ist dabei insbesondere diejenige Plane zu verstehen, in der die Stream-Verwaltung stattfindet, beispielsweise der Stream Auf- und Abbau gesteuert wird. In der sogenannten Data Plane (ins Deutsche übersetzt Datenebene) werden die Stream-Nutzdaten transportiert.

Durch diese "Zweiteilung" der Stream-Kennungen wird es möglich, Anwendungs- bzw. Geräte-seitig längere Namen zu verwenden, deren Größe die bewusst kurzen Kennungen für die Control Plane, die in den Knotenpunkten zu speichern sind, (auch deutlich) überschreitet. So kann auf der Ebene der Anwendungen bzw. Geräte eine "Mangelverwaltung", wie sie mit kurzen Kennungen verbunden sein kann und die immer einen engen Abgleich der Belegung bedingt, vermieden werden. Es können Geräte- bzw. Anwendungsseitig bewusst "lange" Namen gewählt werden.

Die Informationen über die Zuordnung von den Stream-Kennungen der einen Art zu den Stream-Kennungen der anderen Art wird dabei erfindungsgemäß in Einträgen abgelegt, die sich durch einen neuen, speziell für diesen Zweck vorgesehenen Typ auszeichnen. Die auf dem DNS-Server hinterlegten Einträge verknüpfen die eine Art von Stream-Kennungen mit der anderen.

Bei den auf dem DNS-Server gespeicherten Einträgen handelt es sich bevorzugt um Resource Records, wobei die Resource Records insbesondere Teil einer auf dem DNS-Server gespeicherten Datei sind.

Erfindungsgemäß kommt anstelle eines aus dem Stand der Technik vorbekannten Typs ("type"), beispielsweise anstelle derjenigen Typen, die in RFC 1035 für Resource Records (RR) definiert sind, etwa des Typs "A", "TXT", "PTR", "NS", "SOA" oder auch Typen gemäß anderer Standards, insbesondere anderer RFCs, erfindungsgemäß ein neuer Typ speziell für die Bereitstellung von Stream-Kennungen im Rahmen eines Namensdienstes zum Einsatz. Dieser könnte beispielsweise als Typ "TSN" bezeichnet werden. Es handelt sich bevorzugt um einen 16-bit-Typ. Der genaue Wert des Typs kann zweckmäßiger Weise im Rahmen einer Standardisierung festgelegt werden, insbesondere durch die Internet Engineering Task Force (IETF) bzw. von der Internet Assigned Numbers Authority (IANA).

Es sei angemerkt, dass RFC für Request for Comments der Internet Engineering Task Force Group (IETF) steht. Der RFC 1035 beispielsweise steht unter https://tools.ietf.org/html/rfc10345 zur Verfügung.

Durch die erfindungsgemäße Einführung eines neuen Typs für Namensdienst-Einträge lassen sich TSN-bezogene Informationen, insbesondere zu TSN-Geräten, im "DNS-Datenhaushalt" einfach und störungsfrei abrufen und aktualisieren.

Insbesondere wird gegenüber dem, Fall, dass die Informationen über die Zuordnung von Stream Kennungen erster und zweiter Art in Resource Records des Typs "TXT" hinterlegt werden, wie es in der ebenfalls auf die Anmelderin zurückgehenden europäischen Patentanmeldung mit dem Aktenzeichen EP 17187473.8 vorgeschlagen ist, der bedingte Update der TSN-Informationen im DNS vereinfacht, weil die Bedingung sich nun spezifisch genug auf die TSN-Informationen bezieht, anstatt viel zu unspezifisch auf TXT RRs. Da TXT RRs für viele verschiedene Anwendungen eingesetzt werden (siehe insbesondere RFC 6763) und DNS Query-Operationen maximal auf den RR-Typ filtern können, können TSN-Applikationen eine größere Anzahl von TXT RRS als Antwort erhalten, die dann erst darauf untersucht werden müssen, ob und wo sich ein TXT RR mit TSN-Informationen befindet. Gerade auf IO-Geräten kann es sein, dass dafür benötigte Ressourcen knapp sind bzw. teure Hardware erfordern.

Gemäß der vorliegenden Erfindung werden, aufgrund des speziell für TSN-Informationen vorgesehenen Typs, insbesondere Resource Record Typs, auf eine Anfrage nur TSN-spezifische Informationen erhalten. Insbesondere kommen nur "kleine" TSN RRs und keine sonstigen TXT RRs, die pro RR bis zu 64 K Größe erreichen dürfen, zurück.

Auch sind bei der erfindungsgemäßen Vorgehensweise keine TSN-spezifischen Unterdomains zwingend erforderlich.

Ist ein DNS Update erfolgreich, dann ist garantiert, dass keine anderen Informationen versehentlich in Mitleidenschaft gezogen wurden und dass kein anderer DNS Client seinerseits versehentlich diese neuen Daten beschädigt hat. Ein (wiederholtes) Nachfassen zur Kontrolle ist unnötig.

Schlägt ein DNS Update fehl, dann kann mit einem einzelnen nachfolgenden DNS QUERY die bereits früher hinterlegte TSN Stream Kennung der zweiten Art gelesen werden.

Weiterhin macht es die erfindungsgemäße Vorgehenswiese möglich, dass im Rahmen der Einrichtung einer Applikation zunächst nur auf eine oder mehrere Stream-Kennungen erster Art zugegriffen wird, und praktisch erst "in letzter Minute" die Verknüpfung zu einer Stream-Kennung der zweiten Art unter Rückgriff auf den DNS-Server hergestellt wird. Hierüber lassen sich die (planerischen) Prozesse der Stream-Kennungen erster und zweiter Art organisatorisch und zeitlich voneinander entkoppeln. Damit können Kennungen erster Art bereits festgelegt werden, bevor die endgültigen, in der TSN Control Plane zu benutzenden Kennungen zweiter Art festgelegt sind.

Entsprechend kann vorgesehen sein, dass von dem wenigstens einen Stream-Teilnehmer die Anfrage-Nachricht erst gesendet wird, nachdem die Einrichtung einer Applikation, an welcher der Stream-Teilnehmer teilnimmt, abgeschlossen wurde, beispielsweise durch den Download der Applikation in ein IO-Gerät von einem Engineering-Tool aus.

Die Anfrage-Nachricht, welche von dem wenigstens einen Stream-Teilnehmer an einen DNS-Server gesendet wird, umfasst den neuen, vorgegebenen Typ, der ausschließlich für Einträge insbesondere Resource Records im Namensdienst verwendet wird, die jeweils eine einem Stream zugeordnete Stream-Kennung erster Art und eine von dieser verschiedene, dem jeweiligen Stream zugeordnete Stream-Kennung zweiter Art umfassen, also die TSN- bzw. Stream-spezifischen Informationen umfassen.

Unter einem Namensdienst ist insbesondere ein Dienst zu verstehen, welcher (numerischen) IP-Adressen, etwa IPv4 oder IPv6 IP-Adressen, Namen zuordnet, insbesondere Domainnamen, von Geräten, Rechnern, Diensten usw. Das Domain Name System (DNS) ist ein solcher Dienst, dessen Hauptaufgabe in der Regel in der Beantwortung von Anfragen zur Namensauflösung, also Übersetzung von Namen in Adressen, insbesondere in IPbasierten Netzwerken besteht. Zu dem DNS gehörige Standards sind insbesondere der RFC 1034 und RFC 1035. Ein Server, der einen Namensdienst anbietet, wird auch als Namensdienst-Server (engl.: Nameserver) bezeichnet, im Falle von DNS spricht man auch von einem DNS-Server.

Ein DNS-Server, der erfindungsgemäß verwendet wird, kann auch ein lokaler DNS-Server sein. Es ist unerheblich, "von wo aus" der DNS-Server seinen Dienst erbringt, er kann überall erbracht werden, solange IP-Erreichbarkeit (IP-KonnekLivität) zu dem oder den erbringenden DNS-Server(n) besteht. "Lokal" kann beispielsweise im gleichen Subnetz oder auch irgendwo in einer Cloud beispielsweise eines Unternehmens sein. Diese Freiheit bzw. Unabhängigkeit ist ein wichtiger Charakterzug eines Namensdienstes, insbesondere des DNS.

Die Übertragung von Daten via Stream erfolgt in einem TSN-Netzwerk, wobei hierunter ein Netzwerk zu verstehen ist, welches einem oder mehreren als Time Sensitive Networking (TSN) bezeichneten Standards genügt, insbesondere eine oder mehrere TSN-fähige Knotenpunkte, etwa Switches und/oder Bridges, umfasst. Zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Bevorzugt handelt es sich um ein industrielles Netzwerk, insbesondere einer industriellen Automatisierungsanlage.

Im Anschluss daran, dass sich der wenigstens eine Stream-Teilnehmer unter Rückgriff auf die Stream-Kennung zweiter Art an dem Stream angemeldet hat, können Daten über den Stream gesendet werden.

Was die für Streams vorgesehene Reservierung angeht, stehen prinzipiell unterschiedliche, aus dem Stand der Technik vorbekannte Möglichkeiten zur Verfügung. IEEE 802.1Qcc beispielsweise beschreibt zumindest drei Ansätze für diese, konkret ein sogenanntes "Fully decentralized model", ein "Fully centralized model", wie es beispielsweise bei PROFINET IRT zum Einsatz kommt, und ein Hybrid-Model "centralized network, decentralized user".

Der Reservierungsablauf ist unter anderem von dem jeweiligen Reservierungsprotokoll, insbesondere gemäß IEEE 802.1Qcc, abhängig. Als Beispiel für ein Reservierungsprotokoll, dass zum Einsatz kommen kann, sei MSRP genannt.

Selbstverständlich kann vorgesehen sein, dass zwei oder mehr Stream-Teilnehmer eine Anfrage-Nachricht an den DNS-Server senden, wobei dann die Anfrage-Nachricht jedes Stream-Teilnehmers wenigsten eine dem jeweiligen Stream-Teilnehmer bekannte Stream-Kennung der ersten Art und den vorgegebenen Typ umfasst, und dass jeder Stream-Teilnehmer eine Antwort-Nachricht von dem DNS-Server erhält, welche eine zu dem Stream gehörige Stream-Kennung der zweiten Art enthält, und sich jeder Stream-Teilnehmer unter Verwendung der erhaltenen Stream-Kennung an dem Stream anmeldet. Die den Stream-Teilnehmern bekannte Stream-Kennung der ersten Art, die mit der jeweiligen Anfrage-Nachricht gesendet wird, kann dann für alle Stream-Teilnehmer gleich sein. Auch ist es möglich, dass für verschiedene Stream-Kennungen der ersten Art für einen Stream existieren.

Da für einen Stream in de Control Plane in der Regel immer nur genau eine Stream Kennung existiert bzw. verwendet wird, können dann auf dem DNS-Server zu genau einer Stream-Kennung der zweiten Art mehrere Einträge mit verschiedenen Stream-Kennungen der ersten Art existieren.

Weiterhin versteht sich, dass nur einer oder auch mehrere Streams unter Durchführung des erfindungsgemäßen Verfahrens in einem Netzwerk eingerichtet werden können.

Stream-Teilnehmer können beispielsweise in Form von (End-)Geräten vorliegen. Stream-Teilnehmer können auch durch Anwendungen bzw. - insbesondere im Falle verteilter Anwendungen - Anwendungsteile gegeben sein.

Zwei oder mehr Stream-Teilnehmer können beispielsweise durch eine Steuerung, etwa eine SPS, und einen oder mehrere Sensoren einer Automatisierungsanlage gegeben sein, welche erfasste Messdaten über einen Stream an die SPS übermitteln. Sind mehrere Sensoren vorhanden, die über einen Stream an die SPS senden, ist ein Szenario mit mehreren Talkern und genau einen Listener gegeben. Sollen beispielsweise Daten, etwa Stellwer te, von einer Steuerung, insbesondere SPS an einen oder mehrere Aktoren gesendet werden, wäre ein Szenario mit genau einem Talker und einem oder mehreren Listenern gegeben.

Bei Stream-Teilnehmern kann es sich um Teilnehmer bzw. Teile einer verteilten Applikation handeln. Sensoren/Aktoren und eine SPS können z.B. Teile eine verteilte TSN-Anwendung "Steuerung" bilden.

Es sei angemerkt, dass es sich bei den zwei oder mehr Stream-Teilnehmern um verschiedene (End-)Geräte in einem Netzwerk handeln kann, es aber auch möglich ist, dass sich diese auf einem (End-)Gerät befinden. Es können z.B. zwei oder mehr Anwendungen bzw. Teile einer Anwendung, die an einem Stream teilnehmen möchten, auf einem Gerät laufen, welches eine Bridge - ggf. eine rein software-implementierte Bridge - bzw. Bridge-Funktion umfasst. Dies kann insbesondere im Bereich von Virtualisierungen der Fall sein. Rein beispielhaft seien eine virtuelle CPU und ein Human Interface (HMI) auf einem Rechner genannt.

Bei der Stream-Kennung erster Art handelt es sich bevorzugt um einen seitens des wenigstens einen Stream-Teilnehmers zur Identifizierung des Streams verwendeten Stream-Namen, bevorzugt einen dem Stream zugeordneten Domain Namen, insbesondere einen dem Stream zugeordneten Owner Namen gemäß RFC 1034.

Es kann sich bei der Stream-Kennung erster Art um einen vollständig qualifizierten Domain Name (FQDN) insbesondere im Sinne von RFC 7719 handeln.

Die Stream-Kennung erster Art ist weiterhin bevorzugt eine solche, die von Anwendern benutzt wird.

Die Stream-Kennung erster Art, die von dem wenigstens einen Stream-Teilnehmer mit der Anfrage-Nachricht an den DNS-Server übermittelt wird, um die Stream-Kennung zweiter Art abzufragen, ist dem wenigstens einen Stream-Teilnehmer bekannt. Diese kann dem wenigstens einen Stream-Teilnehmer auf beliebige Art bekannt gemacht werden bzw. worden sein, beispielsweise durch Zuweisung von einer zentralen Stelle. Auch kann die Stream-Kennung erster Art von dem Stream-Teilnehmer generiert worden sein. Lediglich beispielhaft sei in diesem Zusammenhang auf die ebenfalls auf die Anmelderin zurückgehende Anmeldung des Aktenzeichens EP 17187473.8 verwiesen, die ein entsprechendes Verfahren offenbart.

Die Stream-Kennung zweiter Art ist insbesondere eine solche, die in der TSN-Anwendungs-Ebene ("TSN Application Plane") verwendet wird.

Es kann sich bei der Stream-Kennung der zweiten Art um eine seitens des Netzwerks, insbesondere in der (TSN) Control Plane - also Kontrollebene - des Netzwerks zur Identifizierung des Streams verwendete Stream ID, bevorzugt gemäß IEEE 802.1Qat handeln.

Stream-Kennungen der zweiten Art sind weiterhin bevorzugt 64 Bit groß. So wird sichergestellt, dass das Speicherbudget in den Knotenpunkten, etwa Bridges und/oder Switches des Netzwerks nicht unnötig be- bzw. überlastet wird.

Es kann vorgesehen sein, dass das Netzwerk einen oder mehrere Knotenpunkte, insbesondere Bridges und/oder Switches umfasst, und die Stream-Kennung der zweiten Art in einem oder mehreren Knotenpunkten des Netzwerkes gespeichert wird.

Die in Bit angegebene Größe der Stream-Kennung der ersten Art überschreitet bevorzugt die in Bit angegebene Größe der Stream-Kennung der zweiten Art. Durch die Wahl von "langen" bzw. längeren Stream-Kennungen erster Art kann eine Mangelverwaltung auf der Anwendungsebene zuverlässig vermieden werden.

Eine weitere Ausführungsform sich dadurch aus, dass die Anfrage-Nachricht in Form einer DNS-Query gesendet wird. Alternativ oder zusätzlich kann vorgesehen sein, dass die Antwort-Nachricht in Form einer DNS-Query gesendet wird.

Das erfindungsgemäße Gerät ist in bevorzugter Ausgestaltung entsprechend ausgebildet und/oder eingerichtet.

Es gibt verschiedene Möglichkeiten, wie die Einträge mit der Zuordnung von den Stream-Kennungen erster Art zu denjenigen der zweiten Art auf dem DNS-Server - beispielsweise über DNS-Updates - hinterlegt werden.

Beispielsweise kann vorgesehen sein, dass die Informationen dezentral von Geräten bzw. Anwendungen, denen Kennung(en) beider Art für einen oder mehrere Streams bekannt sind, an den Namensdienst-Server übermittelt werden.

So zeichnet sich eine weitere Ausführungsform des erfindungsgemäßen Verfahrens dadurch aus, dass insbesondere bevor von dem wenigstens einem Stream-Teilnehmer die Anfrage-Nachricht an den DNS-Server gesendet wird, von wenigstens einem weiteren, insbesondere den Initiator des Streams darstellenden Stream-Teilnehmer, wenigstens eine Update-Nachricht, welche einen Eintrag für den Namensdienst-Server umfasst, der zumindest eine Stream-Kennung der ersten Art und zumindest eine Stream-Kennung der zweiten Art für den Stream und eine Angabe des vorgegeben Typs enthält, an den DNS-Server gesendet wird.

Das erfindungsgemäße Gerät kann entsprechend ausgebildet und/oder eingerichtet sein, um Update-Nachrichten, welche einen Eintrag für einen DNS-Server umfassen, der zumindest eine Stream-Kennung der ersten Art und zumindest eine Stream-Kennung der zweiten Art für einen Stream und eine Angabe des vorgegeben Typs enthalten, an den DNS-Server zu senden, insbesondere in Form eines DNS-Updates bevorzugt gemäß RFC 2163.

Die Stream-Kennung erster Art aus der Update-Nachricht ist bevorzugt durch einen kanonischen Name gemäß RFC 7719 gegeben.

Die Informationen könne alternativ oder zusätzlich auch von zentraler Stelle kommen.

Entsprechend kann alternativ oder zusätzlich vorgesehen sein, dass insbesondere bevor von dem wenigstens einem Stream-Teilnehmer die Anfrage-Nachricht an den DNS-Server gesendet wird, von einer zentralen Stelle wenigstens eine Update-Nachricht, welche einen Eintrag für den DNS-Server umfasst, der zumindest eine Stream-Kennung der ersten Art und zumindest eine Stream-Kennung der zweiten Art für den Stream und eine Angabe des vorgegeben Typs enthält, an den DNS-Server gesendet wird.

Der Eintrag aus der Update-Nachricht umfasst neben den Stream-Kennungen der beiden Arten und der Angabe des vorgegebenen Typs bevorzugt eine Klasse und/oder eine TTL-Angabe und/oder einen bevorzugt 64 Bit großen RDATA-Bereich.

Der Eintrag aus der Update-Nachricht ist weiterhin bevorzugt derart aufgebaut, dass die Stream-Kennung der ersten Art jeweils am Anfang steht und diesem der Typ, die Klasse, die TTL-Angabe und der RDATA-Bereich folgt.

Die Stream-Kennung der zweiten Art ist in weiterer bevorzugter Ausgestaltung in dem RDATA Bereich des Eintrags angegeben, wobei insbesondere die Stream-Kennung der zweiten Art mit dem höherwertigsten Oktett zuerst angegeben ist, wobei das höchstwertige Bit als Bit 0 gezählt wird. Dies entspricht der sogenannten Network-order. Das Zählen des höchstwertigen Bits als 0 entspricht der IETF-Konvention.

Die Update-Nachricht wird besonders bevorzugt in Form eines DNS-Updates insbesondere gemäß RFC 2163 an den DNS-Server gesendet.

Gegenstand der Erfindung ist darüber hinaus ein Verfahren zur Bereitstellung von Stream-Kennungs-Informationen, bei dem auf einem DNS-Server wenigstens eine Stream-Kennungs-Datei bereitgestellt wird, wobei die Stream-Kennungs-Datei Einträge umfasst, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen.

Die Einträge, die auf dem DNS-Server bereitgestellt sind bzw. werden, und die jeweils eine einem Stream zugeordnete Stream-Kennung erster Art und eine von dieser verschiedene, dem jeweiligen Stream zugeordnete Stream-Kennung zweiter Art verknüpfen, und die die Angabe eines vorgegebenen Typs umfassen, der ausschließlich für diese Art von Einträgen verwendet ist bzw. wird, zeichnen sich bevorzugt durch die gleiche Struktur aus, die vorliegend für die Einträge aus den Update Nachrichten angegeben ist, umfassen also bevorzugt zusätzlich eine Klasse und/oder eine TTL-Angabe und/oder einen bevorzugt 64 Bit großen RDATA-Bereich und sind bevorzugt derart aufgebaut, dass die Stream-Kennung der ersten Art jeweils am Anfang steht und dieser der Typ, die Klasse, die TTL-Angabe und der RDATA-Bereich folgt, und in dem insbesondere die Stream-Kennung der zweiten Art bevorzugt nach der sogenannten Network-order angegeben ist.

Die Erfindung betrifft weiterhin die Verwendung eines DNS-Servers zur Bereitstellung einer Stream-Kennungs-Datei, wobei die Stream-Kennungs-Datei Einträge umfasst, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen.

Die Einträge aus der Stream-Kennungs-Datei können, wie vorstehend beschrieben, sowohl von zentraler Stelle als auch dezentral, etwa von Stream-Teilnehmern, übermittelt werden bzw. worden sein, wobei dies bevorzugt in Form von Updates, insbesondere DNS Updates erfolgt bzw. erfolgt ist.

Die Erfindung betrifft auch ein Computerprogramm, das Programmcodemittel zur Durchführung der Schritte des erfindungsgemäßen Verfahrens zur Einrichtung eines Streams bzw. des erfindungsgemäßen Verfahrens zur Bereitstellung von Stream-Kennungs-Informationen umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Einrichtung eines Streams bzw. des erfindungsgemäßen Verfahrens zur Bereitstellung von Stream-Kennungs-Informationen durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung zweier Endgeräte in einem industriellen Netzwerk einer Automatisierungsanlage; die von einem DNS-Server Stream-Kennungs-Informationen erhalten;
- FIG 2: eine rein schematische Darstellung zur Übermittlung von Stream-Kennungs-Informationen an einen Namensdienstserver; und
- FIG 3: die Endgeräte aus FIG 1, wobei von einem Endgerät ein DNS UPDATE für den DNS-Server durchgeführt wird.

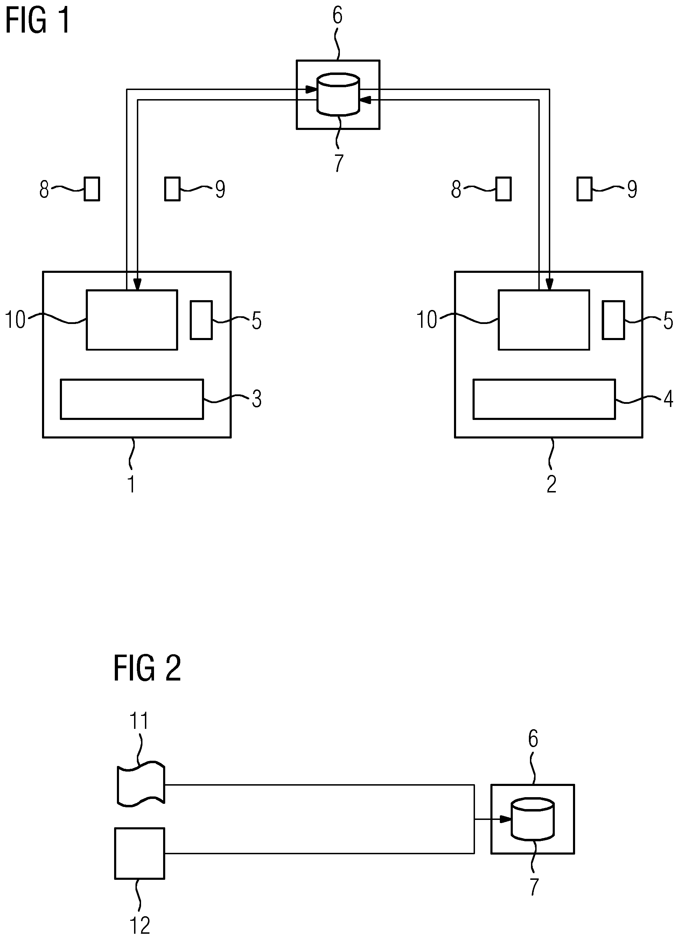

Die FIG 1 zeigt eine rein schematische Teildarstellung eines industriellen Netzwerkes, konkret einer in den Figuren nicht weiter dargestellten Automatisierungsanlage.

Das Netzwerk umfasst eine Vielzahl von Teilnehmern, die über mehrere Netzwerkknotenpunkte in Form von TSN-fähigen Switches, die in der stark vereinfachten FIG 1 nicht gezeigt sind, verbunden sind. Von der Vielzahl der Netzwerkteilnehmer sind in der FIG 1 rein beispielhaft nur zwei Teilnehmer 1, 2 gezeigt. Bei dem in FIG 1 linken Teilnehmer handelt es sich vorliegend um ein Endgerät 1, welches durch eine speicherprogrammierbare Steuerung (SPS) 1 der Automatisierungsanlage gegeben ist. Der weitere Teilnehmer ist durch ein IO-Gerät 2 der Automatisierungsanlage gegeben, welches einen nicht dargestellten Aktor umfasst bzw. mit einem solchen verbunden ist.

Im Betrieb der Automatisierungsanlage werden in hinlänglich bekannter Weise von der SPS 1 zyklisch Stellwerte an das IO-Gerät 2 übermittelt und der Aktor wirkt gemäß den Stellwerten auf einen nicht weiter dargestellten technischen Prozess zyklisch ein.

Die Datenübertragung zwischen der SPS 1 und dem IO-Gerät 2 muss dabei in Echtzeit erfolgen. Konkret muss sichergestellt sein, dass die von der SPS 1 abgehenden Daten jeweils nach einer vorgegebenen Zeit verlustfrei bei dem IO-Gerät 2 ankommen. Dies ist durch die Einrichtung eines TSN-Streams, also einer geschützten Kommunikationsverbindung zwischen den beiden Teilnehmern 1, 2 möglich.

Dabei stellt die die Daten sendende SPS 1 eine Talker (Sender) dar und das IO-Gerät 2 einen Listener (Empfänger).

Der Steuerungsvorgang, welcher einen Datenaustausch zwischen der SPS 1 und dem IO-Gerät 2 in Echtzeit mit garantierter Quality of Service (QoS) erfordert, kann auch als verteilte TSN-Applikation erachtet werden, wobei ein Teil der Applikation auf der SPS 1 läuft und ein Teil auf dem IO-Gerät 2. In der FIG 1 sind die beiden Teile der TSN Applikation "Steuerung" durch Blockbildelemente angedeutet, welche mit dem Bezugszeichen 3 bzw. 4 versehen sind.

Applikationen identifizieren gegenüber Time sensitive Networks (TSN) genauer gesagt gegenüber der "TSN Control Plane" (Kontrollebene) einzelne Streams über zugehörige Stream Kennungen, insbesondere sogenannte Stream IDs. Diese sind aus Sicht von TSN 64 Bitstrings ohne innere Struktur.

Damit zwei oder mehr Stream-Teilnehmer 1, 2 sich mit einem gemeinsamen Stream mit der gleichen Stream ID verbinden können, müssen die Teilnehmer 1, 2 die zum Stream gehörige Kennung für die Control Plane, also die Stream ID kennen.

In der TSN Architektur sind die Stream-IDs für die Stream Identifikation bewusst mit lediglich 64 Bit vergleichsweise kurz gewählt. Dies ist darauf zurückzuführen, dass aus technischen Gründen jeweils alle Stream IDs von allen in einem Netzwerk eingerichteten Streams in allen beteiligten Knotenpunkten, etwa Switches bekannt sein müssen. Würde auf längere Stream IDs zurückgegriffen, würde das Speicherbudget in den Knotenpunkten schnell ausgereizt bzw. überschritten.

In Folge der geringen Länge unterliegen Stream IDs bisher einer "Mangelverwaltung", die immer einen engen Abgleich der Belegung bedingt. Dem kann mit einer manuellen Verwaltung der Stream IDs, durch Erstellen einer Excel Tabelle verhindert werden. Dies ist jedoch nicht mit unerheblichem Aufwand verbunden. Insbesondere auch, um in einem Netzwerk neue TSN-Applikationen 3, 4 einfach durch "Plug and Play" hinzufügen zu können, ohne dass es einer erneuten Gesamtplanung der Stream IDs bedarf, ist eine automatisierte Verwaltung wünschenswert.

Dies wird vorliegend durch eine Ausführungsform des erfindungsgemäßen Verfahrens zum Einrichten eines Streams ermöglicht.

Konkret werden zwei verschiedene Arten von Stream-Kennungen für die Identifizierung der Streams verwendet, nämlich eine Stream-Kennung erster Art, die vorliegend durch seitens der beiden Stream-Teilnehmer 1, 2 zur Identifizierung des Streams verwendeten Stream-Namen, konkret einen dem Stream zugeordneten Owner Namen gemäß RFC 1034 handelt, der sich beispielsweise durch eine Größe von bis zu 2040 bit auszeichnen kann. Der Stream Owner Name ist jedem der beiden Stream-Teilnehmer 1, 2 bekannt. In der FIG 1 ist der den Teilnehmern 1, 2 bekannte Stream-Owner-Name durch einen mit dem Bezugszeichen 5 versehenes Blockelement rein schematisch angedeutet.

Weiterhin kommt eine Stream-Kennung der zweiten Art zum Einsatz, bei der es sich um die in der Control Plane des TSN-Netzwerkes zur Identifizierung von Stream verwendeten 64 Bit langen Stream ID gemäß IEEE 802.1 Qat handelt.

Die Zweiteilung der Kennungen auf der Anwendungs- und Kontrollebene bietet den großen Vorteil, dass einerseits auf Seiten der Control Plane weiterhin Stream-Kennungen mit vergleichsweise geringer Länge verwendet werden können, die in allen beteiligten Knotenpunkten zu speichern sind, und so sichergestellt wird, dass das Speicherbudget nicht überschritten wird. Die Control Plane von TSN kann also weiterhin mit kurzen und damit Speicher-optimierten Stream IDs arbeiten, die von TSN automatisch in alle beteiligten TSN-Switche repliziert werden.

Andererseits können Anwendungs-seitig, also in der TSN-Application Plane (Anwendungsebene) lange Stream-Namen Verwendung finden. Diese sind nur in den einzelnen Geräten 1, 2 zu speichern, nicht jedoch in sämtlichen beteiligten Knotenpunkten. In den Geräten 1, 2 steht daher der benötigte Speicherplatz für das hantieren weniger, dafür längerer Kennungen zur Verfügung. Dies ermöglicht es, dass der Namensraum bewusst nur "dünn belegt" wird und Kollisionen elegant vermieden werden können. Dieses Prinzip ist beispielsweise aus den Domain Name System (DNS) (siehe insbesondere RFC 1034 und 1035) bekannt.

Für die Zuordnung von den längeren, Anwendungs-seitigen Stream-Kennungen erster Art und den kürzeren, TSN-seitigen Stream-Kennungen zweiter Art wird gemäß der vorliegenden Erfindung auf einen Namensdienst-Server 6 zugegriffen. Im Rahmen des hier beschriebenen Ausführungsbeispiels handelt es sich um einen DNS Server 6, der in FIG 1 nur rein schematisch durch ein einfaches Blockelement dargestellt ist.

Damit die Zuordnung unter Rückgriff auf den DNS-Server 6 möglich ist, sind auf diesem zusätzlich zu den für den klassischen Namensdienst erforderlichen Informationen Stream-Kennungs-Informationen gespeichert. Die zusätzlich auf dem DNS-Server 6 bereitstehenden Stream-Kennungs-Informationen sind in der FIG 1 durch ein mit dem Bezugszeichen 7 versehenes Element auf dem DNS-Server 6 angedeutet.

Bei dem hier beschriebenen Ausführungsbeispiel ist auf dem DNS-Server 6 konkret eine Stream-Kennungs-Datei abgelegt, welche die zusätzlichen Informationen umfasst. Diese kann beispielsweise in Form einer Zonendatei insbesondere gemäß RFC 1034 und 1035 oder in Form einer Datei, die auf Basis einer solchen erstellt wurde, gegeben sein, oder auch ein anderes Format aufweisen.

Die Stream-Kennungs-Datei umfasst Einträge in Form von Resource Records (RR), die jeweils eine einem Stream zugeordnete Stream-Kennung erster Art, vorliegend den Stream Owner Namen, und eine von dieser verschiedene, dem jeweiligen Stream zugeordnete Stream-Kennung zweiter Art, vorliegend die in der TSN Control Plane verwendete Stream ID, verknüpfen, und die jeweils die Angabe eines vorgegebenen Typs "TNS" umfassen, der auf dem Namensdienst-Server 6 ausschließlich für diese Art von Einträgen verwendet ist bzw. wird.

Die Resource Records (RR) des neuen Typs "TSN" sind dabei wie folgt aufgebaut:
1. owner: domain name, siehe RFC 1034
2. type (16bit): **"TSN"** - der genaue Wert wird zweckmäßiger Weise im Zuge einer Standardisierung durch die IETF von der IANA zugewiesen
3. class (16bit): "IN", siehe RFC 1034.
4. TTL (32bit): wie in RFC 1034 definiert.
5. RDATA: **64bit TSN Stream ID (Stream Identifier)** in sog. network order, also mit dem höherwertigsten Oktett zuerst, wobei das höchstwertige Bit gemäß IETF-Konvention als bit 0(!) gezählt wird.

Es sei angemerkt, dass die gegenüber den aus dem Stand der Technik vorbekannten Resource Records (RR) neuen Felder in dieser Aufstellung fett hervorgehoben sind. Vorbekannte Resource Records gehen beispielsweise aus RFC 1025 hervor.

Ein Beispiel für einen Resorce Record dieser Form wäre:
rocket-launcher.coyote.acme.corp. TSN IN deadbeefcafebabe
mit dem nur beispielshaft gewählten Stream Owner Namen "rocket-launcher.coyote.acme.corp" in Form eines vollständig qualifizierten Domain Namens (FQDM) und einer ebenfalls rein beispielhaft als "deadbeefcafebabe" gewählten 64Bit Stream ID in hexadezimaler Schreibweise im RDATA Bereich des Resource Records.

Es sei angemerkt, dass in dem obigen Beispiel kein Wert für die TTL ("Time to Live") aufgeführt ist. Diese kann beispielsweise 600 betragen, was einer TTL von 10 Minuten entspricht, oder auch anders ausfallen. Dieser Wert hat nur für das DNS-Caching, nicht jedoch TSN eine Bedeutung.

Darauf, wie die Stream-Kennungs-Informationen im DNS bereitgestellt wurden, wird weiter unten noch näher eingegangen.

Um die zu dem Stream gehörige Stream ID zu erfahren, senden sowohl die SPS 1 als auch das IO-Gerät 2 bzw. eine Anfrage-Nachricht 8 an den DNS-Server 6. Dies geschieht konkret in Form einer DNS Query. In FIG 1 ist die Anfrage-Nachricht bzw. DNS Query als mit dem Bezugszeichen 8 versehenes Blockbildelement neben einem zu dem DNS-Server 6 zeigenden Pfeil angedeutet.

Die Anfrage-Nachrichten 8 umfassen jeweils die der SPS 1 bzw. dem IO-Gerät 2 bekannte Stream-Kennung der ersten Art in Form des Stream Owner Namens 5 und den vorgegebenen Typ "TNS".

Für den oben beispielhaft angegeben Stream Namen, würde die Anfrage lauten
DNS QUERY:
rocket-launcher.coyote.acme.corp. TSN IN

Es sei angemerkt, dass vorliegend der SPS 1 und dem IO-Gerät 2 der gleiche Stream Owner Name 5 als Stream-Kennung erster Art bekannt ist. Dies ist jedoch nicht zwingend der Fall. Vielmehr können verschiedenen Teilnehmern auch verschiedene Stream-Kennungen erster Art für einen Stream bekannt sein. Dann existieren für eine Stream ID als Stream-Kennung zweiter Art mehrere Resource Records, konkret für jede Stream-Kennung erster Art ein RR.

Auf die DNS Query erhalten sowohl die SPS 1 als auch das IO-Gerät jeweils eine Antwort-Nachricht von dem DNS-Server 6, dies vorliegend ebenfalls in Form einer DNS Query. Die Antwort-Nachricht ist in FIG 1 durch ein mit der Bezugsziffer 9 versehenes Element neben einem von dem DNS-Server 6 zu der SPS 1 bzw. dem IO-Gerät 2 weisenden Pfeil eingezeichnet.

Im Rahmen des hier beschriebenen Ausführungsbeispiels umfassen die SPS 1 und das IO-Gerät 2 jeweils einen Stream-ID-Modul 10, welche ausgebildet ist, um das Senden von Anfrage-Nachrichten 8 und den Empfang von Antwort-Nachricht 9, also die DNS Queries abzuwickeln. Hierfür ist das Stream-ID-Modul 10 entsprechend ausgebildet und/oder eingerichtet. Das Stream-ID-Modul 10 kann beispielsweise rein Software-implementiert sein, wobei die Software dann insbesondere auf ohnehin vorhandener allgemeiner Hardware der Geräte 1, 2 laufen kann, oder auch rein Hardware-implementiert sein, insbesondere durch speziell für das Modul 10 vorgesehener Hardware, oder auch eine Kombination aus Software und insbesondere speziell für das Modul 10 vorgesehene Hardware umfassen.

Die von dem DNS-Server 6 erhaltene Antwort-Nachricht 9 umfasst die zu dem Stream gehörige Stream ID. Diese wird von dem Stream-ID-Modul 10 aus der Antwort Nachricht 9 entnommen und im Anschluss daran können sich die SPS 1 und das IO-Gerät 2 an dem Stream mit der zugehörigen Stream ID anmelden und es können Daten in Echtzeit über den Stream von der SPS 1 an das IO-Gerät 2 übertragen werden. Die Anmeldung an den Stream kann auch mittels des Stream-ID-Moduls 10 abgewickelt werden, welches dann entsprechend ausgebildet und/oder eingerichtet ist.

Es sei angemerkt, dass beispielsweise die Reservierung von Ressourcen an den beteiligten Knotenpunkten und die nachfolgende Übertragung bzw. Weiterleitungen von Datenpaketen genauso erfolgen kann, wie aus dem Stand der Technik hinlänglich vorbekannt, weshalb auf diese Aspekte nicht näher eingegangen wird.

Vorliegend wurden die Stream-Kennungs-Informationen in Form der standardisierten Zonendatei insbesondere gemäß RFC 1034 und RFC 1035 von einem Engineering-Werkzeug, mit welchem das Netzwerk, an dem die in FIG 1 dargestellten Geräte 1, 2 teilnehmen, aufgebaut wurde, übergeben. Die Zonendatei ist dabei mittels dem zentralen Engineering-Werkzeug bereitgestellt und anschließend von dem DNS-Server 6 importiert worden.

Dieses ist in FIG 2 rein schematisch dargestellt. In dieser ist die Zonendatei mit dem Bezugszeichen 11 versehen und über einen von dieser zu dem DNS-Server 6 zeigenden Pfeil ist der Import angedeutet.

Es kann beispielsweise auch ein direkter Transfer von DNS-Daten mit Hilfe der DNS UPDATE-Operation, insbesondere gemäß dem RFC 2136 "Dynamic Updates in the Domain Name System (DNS UPDATE))" erfolgen.

Alternativ oder zusätzlich dazu, dass ein Engineering-Werkzeug herangezogen wird, kann eine Datei mit Stream-Kennungs-Informationen auch von einem zentralen Online-Tool bereitgestellt, und anschließend an den Namensdienst-Server 6 übertragen werden, insbesondere durch eine DNS UPDATE-Operation gemäß dem RFC 2136.

In FIG 2 ist ein Online-Tool schematisch als mit dem Bezugszeichen 12 versehenes Blockelement dargestellt und über einen von diesem zu dem DNS-Server 6 weisenden Pfeil ist das DNS Update angedeutet.

Alternativ dazu, dass die Stream-Kennungs-Informationen von zentraler Stelle an den DNS-Server 6 übermittelt werden, kann die Information auch dezentral, von Stream-Teilnehmer darstellenden Netzwerk-Teilnehmern, ebenfalls über DNS Updates an den Server 6 übermittelt worden sein bzw. laufend übermittelt werden. Es kann beispielswiese sein, dass zumindest dem jeweiligen Stream-Initiator, also demjenigen Teilnehmer, der den Stream im Netzwerk ankündigt bzw. initiiert, die zu dem Stream gehörigen Kennungen bei der Art nicht über den DNS-Server 6 sondern auf anderem Wege bekannt gemacht werden bzw. worden sind.

Dann kann der Stream-Initiator wenigstens eine Update-Nachricht, welche einen Eintrag für den Namensdienst-Server umfasst, der zumindest eine Stream-Kennung zweiter Art, insbesondere Stream ID, und eine oder mehrere Stream-Kennung(en) erster Art, insbesondere Domain bzw. Owner Namen, enthält, an den Namensdienst-Server übermitteln.

Dies kann insbesondere über ein DNS-Update, etwa gemäß dem RFC 2136 erfolgen. Übermittelt jeder Stream-Initiator die Daten auf diese Weise an einen Namensdienst-Server, können diese von weiteren Teilnehmern abgerufen werden.

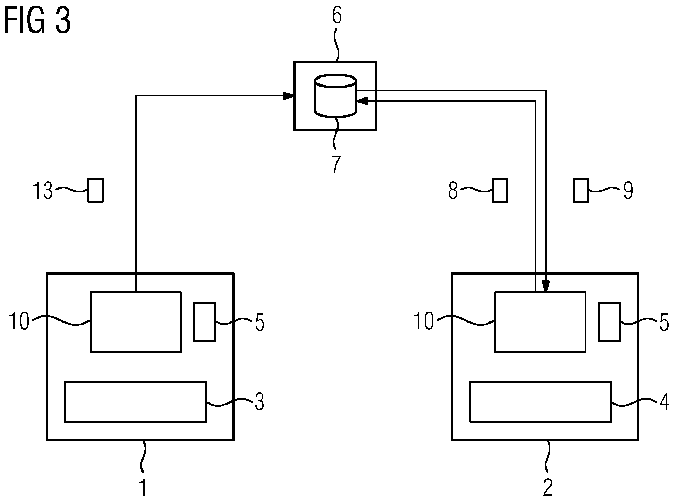

Der Vorgang der DNS UPDATES seitens eines Stream-Initiators ist in der FIG 3 rein schematisch angedeutet. Dabei sind gleiche Komponenten bzw. Elemente mit gleichen Bezugszeichen versehen.

Das von der den Stream-Initiator darstellenden SPS 1 durchgeführte DNS UPDATE ist durch ein mit dem Bezugszeichen 13 versehenes Blockelement neben einem von der SPS 1 zu dem DNS-Server 6 weisenden Pfeil dargestellt. Das DNS UPDATE für die (dezentrale) Bereitstellung von TSN- bzw- Stream-Informationen im Namensdienst wird dabei von dem Stream-ID-Modul 10 der SPS 1 abgewickelt, welches entsprechend ausgebildet und/oder eingerichtet ist. Da die SPS 1 die Stream ID bereits kennt, ist seitens dieser keine DNS Query zur Abfrage dieser mehr nötig, wie im Szenario gemäß FIG 1.

Von dem IO-Gerät 2 wird eine DNS Query aber - genau wie bei dem Szenario gemäß FIG 1 - durchgeführt. Hier sei auf die obige Beschreibung verwiesen.

Es sei angemerkt, dass ein Stream prinzipiell sowohl von einem Talker als auch einem Listener initiiert werden kann, der Stream-Initiator also durch einen Talker oder Listener gegeben sein kann. In Konstellationen mit mehreren Listenern, die von genau einem Talker Daten empfangen, oder mit mehreren Talkern, die an genau einen Listener Daten senden, wird jeweils der "einzelne" Teilnehmer, also der eine Talker, der mehrere Listener hat, oder der eine Listener für den es mehrere Talker gibt, der Stream-Initiator sein.

Unabhängig davon, wie die Informationen über die Stream-Kennungen in dem DNs-Server 6 bereitgestellt wurden, gilt, dass aufgrund der Verwendung des neuen, speziell zu diesem Zweck eingeführten TYPs der Einträge, insbesondere Resource Records, ein besonders einfaches Update möglich ist - insbesondere im Vergleich dazu, dass Stream-kennungs-Informationen in Resource Records des Typs TXT abgelegt werden.

Der bedingte Update der TSN-Informationen vereinfacht sich, weil die Bedingung sich nun spezifisch genug auf die TSN-Informationen beziehen, anstatt viel zu unspezifisch auf TXT RRs. Zudem sind keine TSN-spezifischen Unterdomains mehr zwingend erforderlich.

Ein Update kann beispielsweise wie folgt aussehen:
DNS UPDATE:
ZONE:
   coyote.acme.corp. SOA IN
PREREQUISITES: --
   *(Leerer RDATA Bereich signalisiert, dass noch kein RRset für TSN existieren muss bzw. soll)*.
   rocket-launcher.coyote.acme.corp. TSN IN (*empty*)
UPDATES:
   rocket-launcher.coyote.acme.corp. TSN IN deadbeefcafebabe
ADDITIONALS:
   --

Ein Eintrag aus einer Update Nachricht kann entsprechend neben den Stream-Kennungen der beiden Arten und der Angabe des vorgegebenen Typs eine Klasse und/oder eine TTL-Angabe und/oder einen bevorzugt 64 Bit großen RDATA-Bereich umfassen. Er kann beispielsweise derart aufgebaut sein, dass die Stream-Kennung der ersten Art jeweils am Anfang steht und dieser der Typ, die Klasse, die TTL-Angabe und der RDATA-Bereich mit der Stream ID folgt. Ein Beispiel hierfür ist durch "rocket-launcher.coyote.acme.corp. TSN IN deadbeefcafebabe" gegeben.

Ist der DNS UPDATE erfolgreich, dann ist garantiert, dass keine anderen Informationen versehentlich in Mitleidenschaft gezogen wurden und dass kein anderer DNS Client seinerseits versehentlich diese neuen Daten beschädigt hat. Ein (wiederholtes) Nachfassen zur Kontrolle ist unnötig.

Schlägt dieser DNS UPDATE fehl, dann kann mit einem einzelnen nachfolgenden DNS QUERY die bereits früher hinterlegte TSN Stream ID gelesen und sofort genutzt werden:
DNS QUERY:
rocket-launcher.coyote.acme.corp. TSN IN

Der oder die Antwort TSN RRs enthält/enthalten die gesuchte(n) Stream ID(s).

Die erfindungsgemäße Vorgehenswiese macht es weiterhin möglich, dass im Rahmen der Einrichtung einer Applikation zunächst nur auf eine oder mehrere Stream-Kennungen erster Art zugegriffen wird, und praktisch erst "in letzter Minute" die Verknüpfung zu einer Stream-Kennung der zweiten Art unter Rückgriff auf den Namensdienst-Server hergestellt wird. Hierüber lassen sich die (planerischen) Prozesse der Stream-Kennungen erster und zweiter Art organisatorisch und zeitlich voneinander entkoppeln. Damit können Kennungen erster Art bereits festgelegt werden, bevor die endgültigen, in der TSN Control Plane zu benutzenden Kennungen zweiter Art festgelegt sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung in den Ansprüchen definiert zu verlassen.

Beispielsweise versteht sich, dass auch wenn in den Figuren 1 und 3 rein beispielhaft nur zwei Stream-Teilnehmer gezeigt sind, sich selbstverständlich beliebig viele weitere Stream-Teilnehmer an dem Stream anmelden können, nachdem sie unter Rückgriff auf den DNS-Server 6 die Stream-ID abgefragt haben.

Auch ist es selbstverständlich möglich, dass in einem Netzwerk mehr als ein Stream unter Durchführung des erfindungsgemäßen Verfahrens eingerichtet wird.

## Patentansprüche

1. Verfahren zum Einrichten eines Streams in einem TSN-Netzwerk, bei dem
- von wenigstens einem Stream-Teilnehmer (1, 2), welcher Daten über den Stream an wenigstens einen weiteren Stream-Teilnehmer (1, 2) senden und/oder Daten über den Stream von wenigstens einem weiteren Stream-Teilnehmer (1, 2) empfangen möchte, eine Anfrage-Nachricht (8) an einen DNS-Server (6), auf dem Einträge hinterlegt sind, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen, gesendet wird, wobei die Anfrage-Nachricht (8) wenigstens eine dem wenigstens einen Stream-Teilnehmer (1, 2) bekannte Stream-Kennung der ersten Art und den vorgegebenen Typ umfasst,
- der wenigstens eine Stream-Teilnehmer (1, 2) eine Antwort-Nachricht (9) von dem DNS-Server (6) erhält, welche eine zu dem Stream gehörige Stream-Kennung der zweiten Art enthält, und
- sich der wenigstens eine Stream-Teilnehmer (1, 2) unter Verwendung der erhaltenen Stream-Kennung an dem Stream anmeldet.

2. Verfahren nach Anspruch 1,
**dadurch gekennzeichnet, dass** es sich bei der Stream-Kennung der erste Art um einen seitens des wenigstens einen Stream-Teilnehmers (1, 2) zur Identifizierung des Streams verwendeten Stream-Namen handelt, und/oder es sich bei der Stream-Kennung der zweiten Art um eine seitens des Netzwerks zur Identifizierung des Streams verwendete Stream ID handelt.

3. Verfahren nach Anspruch 1 oder 2,
**dadurch gekennzeichnet, dass** die in Bit angegebene Größe der Stream-Kennung der ersten Art die in Bit angegebene Größe der Stream-Kennung der zweiten Art überschreitet.

4. Verfahren nach einem der vorhergehenden Ansprüche,
**dadurch gekennzeichnet, dass** die Anfrage-Nachricht (8) in Form einer DNS-Query gesendet wird und/oder die Antwort-Nachricht (9) in Form einer DNS-Query gesendet wird.

5. Verfahren nach einem der vorhergehenden Ansprüche,
**dadurch gekennzeichnet, dass** es sich bei den auf dem DNS-Server (6) gespeicherten Einträgen um Resource Records handelt, die sich durch den vorgegebenen Typ auszeichnen.

6. Verfahren nach einem der vorhergehenden Ansprüche,
**dadurch gekennzeichnet, dass** von wenigstens einem weiteren Stream-Teilnehmer (1, 2), wenigstens eine Update-Nachricht (13), welche einen Eintrag für den DNS-Server (6) umfasst, der zumindest eine Stream-Kennung der ersten Art und zumindest eine Stream-Kennung der zweiten Art für den Stream und eine Angabe des vorgegeben Typs enthält, an den DNS-Server (6) gesendet wird.

7. Verfahren nach einem der vorhergehenden Ansprüche,
**dadurch gekennzeichnet, dass** von einer zentralen Stelle wenigstens eine Update-Nachricht, welche einen Eintrag für den DNS-Server (6) umfasst, der zumindest eine Stream-Kennung der ersten Art und zumindest eine Stream-Kennung der zweiten Art für den Stream und eine Angabe des vorgegeben Typs enthält, an den DNS-Server (6) gesendet wird.

8. Verfahren nach Anspruch 6 oder 7,
**dadurch gekennzeichnet, dass** der Eintrag aus der Update-Nachricht (13) neben den Stream-Kennungen der beiden Arten und der Angabe des vorgegebenen Typs eine Klasse und/oder eine TTL-Angabe und/oder einen bevorzugt 64 Bit großen RDATA-Bereich umfasst.

9. Verfahren nach einem der Ansprüche 6 bis 8,
**dadurch gekennzeichnet, dass** der Eintrag aus der Update-Nachricht (13) derart aufgebaut ist, dass die Stream-Kennung der ersten Art jeweils am Anfang steht und diesem der Typ, die Klasse, die TTL-Angabe und der RDATA-Bereich folgt.

10. Verfahren nach einem der Ansprüche 6 bis 9,
**dadurch gekennzeichnet, dass** die Stream-Kennung der zweiten Art in dem RDATA Bereich des Eintrags angegeben ist.

11. Verfahren nach einem der Ansprüche 6 bis 10,
**dadurch gekennzeichnet, dass** die Update-Nachricht (13) in Form eines DNS-Updates an den DNS-Server (6) gesendet wird.

12. Verfahren nach einem der vorhergehenden Ansprüche,
**dadurch gekennzeichnet, dass** der wenigstens eine Stream-Teilnehmer Teilnehmer einer verteilten Applikation ist.

13. Verfahren nach einem der vorhergehenden Ansprüche,
**dadurch gekennzeichnet, dass** das Netzwerk einen oder mehrere Knotenpunkte umfasst, und die Stream-Kennung der zweiten Art in einem oder mehreren Knotenpunkten des Netzwerkes gespeichert wird.

14. Verfahren zur Bereitstellung von Stream-Kennungs-Informationen, bei dem auf einem DNS-Server (6), wenigstens eine Stream-Kennungs-Datei (11) bereitgestellt wird, wobei die Stream-Kennungs-Datei (11) Einträge umfasst, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen.

15. Verwendung eines DNS-Servers (6), zur Bereitstellung einer Stream-Kennungs-Datei (11), wobei die Stream-Kennungs-Datei (11) Einträge umfasst, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen.

16. Gerät (1, 2), welches ausgebildet und/oder eingerichtet ist, um
- eine Anfrage-Nachricht(8) an einen DNS-Server (6), auf dem Einträge hinterlegt sind, die jeweils eine einem Stream zugeordnete Stream-Kennung erster Art und eine von dieser verschiedene, dem jeweiligen Stream zugeordnete Stream-Kennung zweiter Art und die Angabe eines vorgegebenen Typs, der ausschließlich für diese Art von Einträgen verwendet ist bzw. wird, umfassen, zu senden, wobei die Anfrage-Nachricht wenigstens eine dem Gerät bekannte Stream-Kennung der ersten Art und den vorgegebenen Typ umfasst,
- um eine Antwort-Nachricht (9) von dem DNS-Server (6) zu erhalten, welche eine zu dem Stream gehörige Stream-Kennung der zweiten Art enthält, und
- um sich unter Verwendung der erhaltenen Stream-Kennung der zweiten Art mit einem zugehörigen Stream zu verbinden.

17. Gerät (1, 2) nach Anspruch 16,
**dadurch gekennzeichnet, dass** es sich bei der Stream-Kennung der erste Art um einen seitens des Gerätes (1, 2) zur Identifizierung des Streams verwendeten Stream-Namen, handelt, und/oder es sich bei der Stream-Kennung der zweiten Art um eine seitens eines Netzwerks zur Identifizierung des Streams verwendete Stream ID handelt.

18. Gerät (1, 2) nach einem der Ansprüche 16 oder 17,
**dadurch gekennzeichnet, dass** das Gerät (1, 2) ausgebildet und/oder eingerichtet ist, um die Anfrage-Nachricht (8) in Form einer DNS-Query zu senden und/oder um die Antwort-Nachricht in Form einer DNS-Query zu erhalten.

19. Gerät (1, 2) nach einem der Ansprüche 16 bis 18,
**dadurch gekennzeichnet, dass** das Gerät (1, 2) ausgebildet und/oder eingerichtet ist, um Update-Nachrichten (13), welche einen Eintrag für einen DNS-Server (6) umfassen, der zumindest eine Stream-Kennung der ersten Art und zumindest eine Stream-Kennung der zweiten Art für einen Stream und eine Angabe des vorgegeben Typs enthalten, an den DNS-Server (6) zu senden.

20. Computerprogramm umfassend Programmcode-Mittel zur Durchführung des Verfahrens nach einem der Ansprüche 1 bis 14.

21. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 14 durchzuführen.

## Claims

1. Method for establishing a stream in a TSN network, in which
- at least one stream subscriber (1, 2) wishing to send data via the stream to at least one further stream subscriber (1, 2) and/or wishing to receive data via the stream from at least one further stream subscriber (1, 2) sends a request message (8) to a DNS server (6) on which entries are deposited that each comprise a stream identifier of a first type assigned to a stream and a stream identifier of a second type, which is different than said stream identifier of a first type, assigned to the respective stream and the indication of a stipulated type that is used exclusively for this type of entries, wherein the request message (8) comprises at least one stream identifier of the first type, which is known to the at least one stream subscriber (1, 2), and the stipulated type,
- the at least one stream subscriber (1, 2) receives from the DNS server (6) a response message (9) that contains a stream identifier of the second type associated with the stream, and
- the at least one stream subscriber (1, 2) uses the received stream identifier to register on the stream.

2. Method according to Claim 1,
**characterized in that** the stream identifier of the first type is a stream name used by the at least one stream subscriber (1, 2) to identify the stream, and/or the stream identifier of the second type is a stream ID used by the network to identify the stream.

3. Method according to Claim 1 or 2,
**characterized in that** the size of the stream identifier of the first type indicated in bits exceeds the size of the stream identifier of the second type indicated in bits.

4. Method according to one of the preceding claims,
**characterized in that** the request message (8) is sent in the form of a DNS query and/or the response message (9) is sent in the form of a DNS query.

5. Method according to one of the preceding claims,
**characterized in that** the entries stored on the DNS server (6) are resource records distinguished by the stipulated type.

6. Method according to one of the preceding claims,
**characterized in that** at least one further stream subscriber (1, 2) sends to the DNS server (6) at least one update message (13) that comprises an entry for the DNS server (6) that contains at least one stream identifier of the first type and at least one stream identifier of the second type for the stream and an indication of the stipulated type.

7. Method according to one of the preceding claims,
**characterized in that** a central location sends to the DNS server (6) at least one update message that comprises an entry for the DNS server (6) that contains at least one stream identifier of the first type and at least one stream identifier of the second type for the stream and an indication of the stipulated type.

8. Method according to Claim 6 or 7,
**characterized in that** the entry from the update message (13) comprises not only the stream identifiers of the two types and the indication of the stipulated type but also a class and/or a TTL indication and/or an RDATA area having a size of preferably 64 bits.

9. Method according to one of Claims 6 to 8,
**characterized in that** the entry from the update message (13) is designed such that the stream identifier of the first type is at the beginning each time and this is followed by the type, the class, the TTL indication and the RDATA area.

10. Method according to one of Claims 6 to 9,
**characterized in that** the stream identifier of the second type is indicated in the RDATA area of the entry.

11. Method according to one of Claims 6 to 10,
**characterized in that** the update message (13) is sent to the DNS server (6) in the form of a DNS update.

12. Method according to one of the preceding claims,
**characterized in that** the at least one stream subscriber is a subscriber of a distributed application.

13. Method according to one of the preceding claims,
**characterized in that** the network comprises one or more nodes, and the stream identifier of the second type is stored in one or more nodes of the network.

14. Method for providing stream identifier information, in which at least one stream identifier file (11) is provided on a DNS server (6), wherein the stream identifier file (11) comprises entries that each comprise a stream identifier of a first type assigned to a stream and a stream identifier of a second type, which is different than said stream identifier of a first type, assigned to the respective stream and the indication of a stipulated type that is used exclusively for this type of entries.

15. Use of a DNS server (6) for providing a stream identifier file (11), wherein the stream identifier file (11) comprises entries that each comprise a stream identifier of a first type assigned to a stream and a stream identifier of a second type, which is different than said stream identifier of a first type, assigned to the respective stream and the indication of a stipulated type that is used exclusively for this type of entries.

16. Device (1, 2) that is designed and/or configured
- to send a request message (8) to a DNS server (6) on which entries are deposited that each comprise a stream identifier of a first type assigned to a stream and a stream identifier of a second type, which is different than said stream identifier of a first type, assigned to the respective stream and the indication of a stipulated type that is used exclusively for this type of entries, wherein the request message comprises at least one stream identifier of the first type, which is known to the device, and the stipulated type,
- to receive from the DNS server (6) a response message (9) that contains a stream identifier of the second type associated with the stream, and
- to use the received stream identifier of the second type to connect to an associated stream.

17. Device (1, 2) according to Claim 16,
**characterized in that** the stream identifier of the first type is a stream name used by the device (1, 2) to identify the stream, and/or the stream identifier of the second type is a stream ID used by a network to identify the stream.

18. Device (1, 2) according to either of Claims 16 and 17,
**characterized in that** the device (1, 2) is designed and/or configured to send the request message (8) in the form of a DNS query and/or to receive the response message in the form of a DNS query.

19. Device (1, 2) according to one of Claims 16 to 18,
**characterized in that** the device (1, 2) is designed and/or configured to send to a DNS server (6) update messages (13) that comprise an entry for the DNS server (6) that contains at least one stream identifier of the first type and at least one stream identifier of the second type for a stream and an indication of the stipulated type.

20. Computer program comprising program code means for performing the method according to one of Claims 1 to 14.

21. Computer-readable medium that comprises instructions that, when executed on at least one computer, prompt the at least one computer to perform the steps of the method according to one of Claims 1 to 14.

## Revendications

1. Procédé de réglage d'un flux dans un réseau TSN, dans lequel
- par au moins un participant (1, 2) au flux, qui souhaiterait envoyer des données par le flux à au moins un autre participant (1, 2) au flux et/ou recevoir des données par le flux d'au moins un autre participant (1, 2) au flux, on envoie un message (8) de requête à un serveur (6) DNS, où sont mises en mémoire des inscriptions, qui comprennent respectivement une caractérisation de flux, associée à un flux d'un premier type et une caractérisation de flux, différente de celle-ci et associée au flux respectif, d'un deuxième type et l'indication d'un type donné à l'avance, qui est utilisé ou que l'on utilise exclusivement pour ce type d'inscriptions, le message (8) de requête comprenant au moins une caractérisation de flux connue du au moins un participant (1, 2) au flux, du premier type et le type donné à l'avance,
- le au moins un participant (1, 2) au flux reçoit un message (9) de réponse du serveur (6) DNS, qui contient une caractérisation de flux, appartenant au flux, du deuxième type, et
- le au moins un participant (1, 2) au flux se connecte au flux en utilisant l'identifiant de flux reçu.

2. Procédé suivant la revendication 1,
**caractérisé en ce que** la caractérisation de flux du premier type est une dénomination de flux, utilisée pour l'identification de flux de la part du au moins un participant (1, 3) au flux et/ou une ID de flux utilisée lors de la caractérisation du flux du deuxième type pour identifier le flux de la part du réseau.

3. Procédé suivant la revendication 1 ou 2,
**caractérisé en ce que** la dimension, indiquée en binaire, de la caractérisation du flux du premier type dépasse la dimension, indiquée en binaire, de la caractérisation du flux du deuxième type.

4. Procédé suivant l'une des revendications précédentes,
**caractérisé en ce que** l'on envoie le message (8) de requête sous la forme d'un DNS-Query et/ou on envoie le message (9) de réponse sous la forme d'un DNS-Query.

5. Procédé suivant l'une des revendications précédentes,
**caractérisé en ce que** les inscriptions mises en mémoire sur le serveur (6) DNS sont des Ressource Records, qui se caractérisent par le type donné à l'avance.

6. Procédé suivant l'une des revendications précédentes,
**caractérisé en ce que**, par au moins un autre participant (1, 2) au réseau, il est envoyé au serveur (6) DNS au moins un message (13) de mise à jour, qui comprend une inscription pour le serveur (6) DNS, qui contient au moins une caractérisation de flux du premier type et au moins une caractérisation de flux du deuxième type pour le flux et une indication du type donné à l'avance.

7. Procédé suivant l'une des revendications précédentes,
**caractérisé en ce que**, par un poste central, on envoie au serveur (6) DNS au moins un message de mise à jour, qui comprend une inscription pour le serveur (6) DNS, qui contient au moins une caractérisation de flux du premier type et au moins une caractérisation de flux du deuxième type pour le flux et une indication du type donné à l'avance.

8. Procédé suivant la revendication 6 ou 7,
**caractérisé en ce que** l'inscription composée du message (13) de mise à jour comprend, outre les caractérisations de flux des deux types et l'indication du type donné à l'avance, une classe et/ou une indication TTL et/ou une partie RDATA grande, de préférence de 64 binaire.

9. Procédé suivant l'une des revendications 6 à 8,
**caractérisé en ce que** l'inscription composée du message (13) de mise à jour est constituée de manière à ce que la caractérisation de flux du premier type soit nécessairement au début et que suivent celle-ci le type, la classe, l'indication TTL et la partie RDATA.

10. Procédé suivant l'une des revendications 6 à 9,
**caractérisé en ce que** la caractérisation de flux du deuxième type est indiquée dans la partie RDATA de l'inscription.

11. Procédé suivant l'une des revendications 6 à 10,
**caractérisé en ce que** l'on envoie au serveur (6) DNS le message (13) de mise à jour sous la forme d'un DNS-Update.

12. Procédé suivant l'une des revendications précédentes,
**caractérisé en ce que** le au moins un participant au flux est un participant d'une application partagée.

13. Procédé suivant l'une des revendications précédentes,
**caractérisé en ce que** le réseau comprend un ou plusieurs points nodaux et on met en mémoire la caractérisation de flux du deuxième type dans un point nodal ou dans plusieurs points nodaux du réseau.

14. Procédé de mise à disposition d'informations de caractérisation de flux, dans lequel on met à disposition sur un serveur (6) DNS au moins un fichier (11) de caractérisation de flux, le fichier (11) de caractérisation de flux comprenant des inscriptions, qui comprennent respectivement une caractérisation de flux, associée à un flux du premier type et une caractérisation de flux, différente de celle-ci et associée au flux respectif, du deuxième type et l'indication d'un type donné à l'avance, qui est utilisé exclusivement pour ce type d'inscriptions.

15. Utilisation d'un serveur (6) DNS pour la mise à disposition d'un fichier (11) de caractérisation de flux, le fichier (11) de caractérisation de flux comprenant des inscriptions, qui comprennent chacune une caractérisation, associée à un flux, du premier type et une caractérisation de flux, différente de celle-ci et associée au flux respectif, du deuxième flux et l'indication d'un type donné à l'avance, qui est utilisé exclusivement pour ce type d'inscriptions.

16. Appareil (1, 2), qui est constitué et/ou conçu
- pour envoyer un message (8) de requête à un serveur (6) DNS, où sont mises en mémoire des inscriptions qui comprennent respectivement une caractérisation de flux, associée à un flux, d'un premier type et une caractérisation de flux, différente de celle-ci et associée au flux respectif, d'un deuxième type et l'indication d'un type donné à l'avance, qui est utilisé exclusivement pour ce type d'inscription, le message de requête comprenant au moins une caractérisation de flux, connue de l'appareil, du premier type et le type donné à l'avance,
- pour recevoir un message (9) de réponse du serveur (6) DNS, qui contient une caractérisation de flux, appartenant au flux, du deuxième type, et
- pour relier en utilisant la caractérisation de flux reçue, le deuxième type a un flux lui appartenant.

17. Appareil (1, 2) suivant la revendication 16,
**caractérisé en ce que** c'est, pour la caractérisation de flux du premier type, une dénomination de flux utilisée de la part de l'appareil (1, 2) pour l'identification du flux, et/ou une ID de flux utilisée, lors de la caractérisation du flux du deuxième type, pour identifier le flux de la part d'un réseau.

18. Appareil (1, 2) suivant la revendication 16 ou 17,
**caractérisé en ce que** l'appareil (1, 2) est constitué et/ou conçu pour envoyer le message (8) de requête sous la forme d'un DNS-Query et/ou pour recevoir le message de réponse sous la forme d'un DNS-Query.

19. Appareil (1, 2) suivant l'une des revendications 16 à 18, **caractérisé en ce que** l'appareil (1, 2) est constitué et/ou conçu pour envoyer au serveur (6) DNS des messages (13) de mise à jour, qui comprennent une inscription pour un serveur (6) DNS, la au moins une caractérisation de flux du premier type et au moins une caractérisation de flux du deuxième type pour un flux et une indication du type donné à l'avance.

20. Programme d'ordinateur, comprenant des moyens de code de programme pour effectuer le procédé suivant l'une des revendications 1 à 14.

21. Support déchiffrable par ordinateur, qui comprend des instructions, qui, lorsqu'elles sont réalisées sur au moins un ordinateur, font que le au moins un ordinateur effectue les stades du procédé suivant l'une des revendications 1 à 14.
